# EUROPEAN PATENT SPECIFICATION

(11) **EP 4 493 633 B1**
(45) Date of publication and mention of the grant of the patent: **25.02.2026**
(21) Application number: 23719604.3
(22) Date of filing: 17.03.2023
(51) Int. Cl.: C09J 7/21, C09J 7/24, C09J 7/29, G09F 3/10, G09F 3/02

(54) **LASER PRINTABLE, FLEXIBLE DRUM LABELS**
LASERBEDRUCKBARE FLEXIBLE TROMMELETIKETTEN
ÉTIQUETTES POUR BARILS FLEXIBLES IMPRIMABLES PAR LASER

(30) Priority: 17.03.2022 US 202263320795 P
(43) Date of publication of application: 22.01.2025
(73) Proprietor: Avery Dennison Corporation, Mentor, OH 44060 (US)
(72) Inventor: YE, Yijun, Mentor, OH 44060 (US); DESAI, Ajay, S., Mentor, OH 44060 (US)
(74) Representative: HGF
(86) International application number: PCT/US2023/064610
(87) International publication number: WO 2023/178296

(56) References cited:
- EP-A1- 3 611 308
- EP-A1- 3 779 933
- EP-A2- 0 992 558
- EP-B1- 0 779 162

## Description

### FIELD OF THE INVENTION

The present invention relates to a laser printable, flexible label construction sufficiently durable for marine environments, and to a storage drum comprising the same.

### BACKGROUND OF THE INVENTION

Thermoplastic polyvinyl chloride (PVC) films with pressure-sensitive adhesives have been widely used in both indoor and outdoor labeling applications, such as for consumer and industrial products, although other polymeric films are also useful. They are often used in applications requiring conformability and printability. Unfortunately, PVC-based formulations often result in fogging, and release hydrogen chloride (HCI) when they burn. The released HCI fumes, and the breakdown of the HCI fumes, may pose a health hazard. Furthermore, to achieve the soft, conformable characteristics of flexible polyvinyl chloride, a current practice is to formulate with phthalates, which are associated with potential health risks. In addition, it is also unfortunate that PVC production typically requires a vinyl chloride starting material. The vinyl chloride production, as well as incineration of waste PVC, may create harmful dioxins. Accordingly, label constructions are needed that have characteristics of PVC-based formulations, yet lack PVC and its inherent disadvantages.

One use of PVC labels has been to durably mark dangerous goods packages for carriage by sea. "Durably marked" has been defined to mean that the label or other marking is such as to remain identifiable on packages that have been in the sea for a period of at least three months. Experience has shown that labels manufactured, for example, in accordance with British Standard BS5609, result in the production of a printed label that is capable, when properly applied, of providing the required durable marking.

No current offerings seem to address the need for a label construction that has the conformability and print durability of PVC, without the inclusion of PVC, and that is suitable for use as drum labels in harsh environments, such as marine environments. Further, there is a need for such label constructions that can pass British Standard BS5609 testing. Conventional polyolefin based synthetic films contain high weight percentages (e.g. around 60 weight percent) of nonabrasive filler, and accordingly, such films are highly porous, due to their high filler loading, resulting in a very thick (e.g. greater than 0.15 mm (6 mil)) and expensive film. The label constructions of the present invention are directed toward resolving these deficiencies, and other important ends.

EP3779933A1 discloses label constructions for marine applications comprising a facestock comprising at least one film layer comprising polypropylene and an opacifying agent or a cavitating agent; a surface coating layer and an adhesive layer.

### SUMMARY OF THE INVENTION

Described herein are printable, flexible drum labels that are durable, especially for marine environments and the drums labeled therewith. The label constructions of the present invention, which preferably contain low topcoat coatweights (such as for example, less than 10 gsm, preferably less than 5 gsm), pass the British Standard BS5609 test, preferably, without causing curl and static. The label constructions of the present invention are also flexible, which permits them to be conformable and perform effectively as drum labels.

Accordingly, one aspect of the present invention is directed to label constructions, including: a facestock with a first surface and a second surface; wherein the facestock includes a laminate including: at least one film layer including: a first polymer having a melting point; wherein the first polymer is selected from the group of a polypropylene polymer, polypropylene copolymer, and a combination thereof; and at least one of an opacifying agent and a cavitating agent; and at least one non-woven layer including a second polymer; wherein the second polymer has a melting point at least 5°C greater than the melting point of the first polymer; and a topcoat applied to at least a portion of the first surface of the facestock; and an adhesive layer with a first surface and a second surface; wherein the first surface of the adhesive layer is applied to at least a portion of the second surface of the facestock; and an optional release liner layer applied to at least a portion of the second surface of the adhesive layer.

Another aspect of the present invention is directed to storage drums, including: a container; wherein the container is formed from a material selected from the group of plastic, metal, cellulose fiber, and combinations thereof; and a label including: the label construction described herein; and a laser-printed indicia applied to the topcoat.

Embodiments of the present invention are described below, which are, however, not intended to be limiting for the scope of the present invention. That is, the scope of the present invention is only limited by the appended claims.

### BRIEF DESCRIPTION OF THE DRAWINGS

The accompanying drawings provide a further understanding of the present invention by illustrating embodiments of the present invention, and together with the description, serve to explain the principles of the present invention. In the drawings:
**FIG. 1** illustrates an exemplary embodiment of a label construction as described herein, including a facestock layer, topcoat, adhesive layer, and an optional release liner layer.
**FIG. 2** illustrates an exemplary embodiment of a facestock layer of a label construction as described herein, including a film layer and two nonwoven layers.
**FIG. 3** is a graphical representation of results of stress relaxation testing of label constructions according to the present invention, and comparative films.

None of the figures are drawn to scale.

### DETAILED DESCRIPTION OF THE ILLUSTRATED EMBODIMENTS

### Definitions

As employed above and throughout the disclosure, the following terms, unless otherwise indicated, shall be understood to have the following meanings.

As used herein, the terms "comprises," "comprising," "includes," "including," "has," "having" or any other variation thereof, are intended as open-ended, and cover a non-exclusive inclusion. For example, a process, method, article, or apparatus that comprises a list of elements is not necessarily limited to only those elements, but may include other elements not expressly listed or inherent to such process, method, article, or apparatus. Also, use of "a" or "an" is employed to describe elements and components described herein. This is done merely for convenience and to give a general sense of the scope of the present invention. This description should be read to include "one" or "at least one" and the singular also includes the plural, unless it is obvious that it is meant otherwise by the context.

As used herein, the term "about," when referring to a measurable value such as an amount, a temporal duration, and the like, is meant to encompass variations of ±10%, preferably, ±8%, more preferably, ±5%, even more preferably, ±1%, and yet even more preferably, ±0.1% from the specified value, as such variations are appropriate to perform the disclosed methods.

As used herein, "pressure sensitive adhesive" or "PSA" refers to a material that may be identified by the Dahlquist criterion, which defines a pressure sensitive adhesive as an adhesive having a one second creep compliance of greater than 0.1 cm²/N (1x10⁻⁶ cm²/dyne) as described in *Handbook of PSA Technology,* Donatas Satas (Ed.), 2^{nd} Edition, page 172, Van Nostrand Reinhold, New York, N.Y., 1989. Since modulus is, to a first approximation, the inverse of creep compliance, pressure sensitive adhesives may also be defined as adhesives having a Young's modulus of less than 10 N/cm² (1x10⁶ dynes/cm²). Another well-known means of identifying a pressure sensitive adhesive is an adhesive that it is aggressively and permanently tacky at room temperature, and firmly adheres to a variety of dissimilar surfaces upon mere contact, without the need of more than finger or hand pressure, and which may be removed from smooth surfaces without leaving a residue, as described in *Glossary of Terms Used in the Pressure Sensitive Tape Industry* provided by the Pressure Sensitive Tape Council, 1996. Another suitable definition of a suitable pressure sensitive adhesive is that it preferably has a room temperature storage modulus within the area defined by the following points, as plotted on a graph of modulus versus frequency at 25°C: a range of moduli from about 2 to 4 N/cm² (2x10⁵ to 4x10⁵ dynes/cm²) at a frequency of about 0.1 radians/sec (0.017 Hz), and a range of moduli from about 20 to 80 N/cm² (2x10⁶ to 8x10⁶ dynes/cm²) at a frequency of approximately 100 radians/sec (17 Hz). See, for example, Handbook of PSA Technology (Donatas Satas, Ed.), 2nd Edition, page 173, Van Nostrand Rheinhold, N.Y., 1989. Any of these methods of identifying a pressure sensitive adhesive may be used to identify suitable pressure sensitive adhesives for use in the constructions of the present invention.

As used herein, the term "film" refers to an object that has one dimension (thickness) that is relatively small compared to the other two dimension (length and width). The length and width of a film are typically each 1 cm or greater. The surface of a film defined by its length and width is known herein as the "face" of the film.

As used herein, the prefix "(meth)acryl-" refers to both "methacryl-" and "acryl-", such as in "(meth)acrylic" (meaning both methacrylic and acrylic), "(meth)acrylate" (meaning both methacrylate and acrylate), and "(meth)acrylonitrile" (meaning both methacrylonitrile and acrylonitrile). The term "(meth)acrylate" refers to monomeric acrylic or methacrylic esters of alcohols. Acrylate and methacrylate monomers are referred to collectively herein as "(meth)acrylate" monomers. Polymers prepared from (meth)acrylate monomers are referred to as (meth)acrylate polymers.

As used herein, the term "acrylic polymer" refers to at least one (meth)acrylate polymer or copolymer and may include a blend of different (meth)acrylate polymers and copolymers.

As used herein, the term "polymer" will be understood to include polymers, copolymers (e.g. polymers formed using two or more different monomers), oligomers, and combinations thereof.

The term "copolymer" is used herein to refer to polymers containing copolymerized units of at least two different monomers (e.g. a dipolymer).

As used herein, the term "adhesive layer" means a layer or multiple layers of the same or different pressure sensitive adhesives applied to at least a portion of the first face of the facestock layer of the present invention.

As used herein, the term "release liner" means film sheet (typically paper or polymeric film, usually applied during the manufacturing process) used to prevent a sticky surface from prematurely adhering. It is coated on one or both sides with a release agent, which provides a release effect against any type of a sticky material, such as an adhesive or a mastic.

As used herein, the term "printed indicia" means any string of alphanumeric or special characters used to convey information (such as name, residence or mailing address, telephone number, prescription number, and the like) and/or provide aesthetic appeal. The indicia may be printed by any suitable means including printing by hand, typewriter, or conventional printing (such as flexographic printing, offset printing, inkjet printing, laser inkjet printing, videojet printing, thermal transfer, direct printing, gravure printing, and the like).

As used herein, the abbreviation "gsm" means grams per square meter.

As used herein, the expression "biaxially oriented polypropylene" or "BOPP" means a film or laminate that has been stretched in both the machine direction (MD), and cross (CD) or traverse direction (TD).

As used herein, the "conformable" means a film or laminate capable of substantially conforming to an underlying surface to which it is applied, so that the exposed surface of the conformable film mimics the topology of the underlying surface. In contrast, a non-conformable film, *i.e.* a film which does not have sufficient flexibility, may not follow the contour of the subject or surface to which it is applied, creating bubbles or gaps between the surface and the film. A high tensile modulus may make the film hard to apply over a surface, *e.g*. those surfaces that have curves, angles, ridges and other non-planar configurations, but too low a modulus may result in deformation of the film and potentially causing a distortion of the printed indicia. Films with a high relaxation stress may cause the film to delaminate over time, when the film has been applied to a non-planar surface.

As used herein, the term "durable" means the ability of a label construction to withstand the harsh environmental, or use conditions, as measured by the print key and sand abrasion tests of British Standard BS5609 (1986) for printed pressure-sensitive, adhesive-coated labels for marine use.

As used herein, the term "layflat" means the ability of a label construction to lay flat without curling, in accordance with at least one of the layflat at different humidities testing, or the layflat after laser printing testing, as described in the Examples section.

As used herein, the term "laser-printable" means a film or label construction capable of being printed on by laser printing technology, using at least black and red ink.

All percentages noted herein are percentages by weight based upon the weight of the composition, unless indicated otherwise.

Described herein are laser printable, flexible drum label constructions that are durable, especially in harsh environments, such as for example marine environments where the labels may be exposed to salt water (including marine immersion), sand, UV light, and the like. The labels maintain their dimensional stability and colorfastness, thus remaining readable on packages that have been in the sea for long periods of time, such as for example, at least three months. Thus, the labels advantageously can be used to identify the contents of drums that have been lost at sea for long periods of time. The labels are suitable for application to any drum. In some embodiments, the labels are suitable for use on drums containing dangerous materials, such as for example, chemical drums containing hazardous materials. In some embodiments, the label constructions pass the tests of British Standard BS5609 (1986). In some embodiments, the label constructions pass the tests of British Standard BS5609 (1986) Section 2, related to marine immersion, dimensional stability and color fastness of printed pressure-sensitive adhesive-coated labels for marine use. In some embodiments, the label constructions pass the tests of British Standard BS5609 (1986) Section 3, related to print key effectiveness, abrasion and permanence of printed pressure-sensitive, adhesive-coated labels for marine use. In some embodiments, the label constructions pass at least one of Section 2 and Section 3 of British Standard BS5609 (1986).

The present invention will be described in further detail with respect to the label constructions, as well as the drums labeled therewith. The label constructions include a facestock, a topcoat, and an adhesive layer. The facestock has a first surface and an oppositely directed second surface. The facestock may have any suitable thickness. In certain embodiments, the facestock has a total thickness of from 50 µm to 150 µm. In some embodiments, the facestock has a total thickness of from 75 µm to 140 µm, from 85 µm to 135 µm, from 95 µm to 130 µm, or from 100 µm to 125 µm.

The facestock includes a laminate. The laminate includes at least one film layer and at least one non-woven layer. The film layer includes a first polymer and an opacifying agent, or a cavitating agent, or both. In other words, the film layer includes at least one of an opacifying agent or a cavitatating agent. The first polymer is at least one of a polypropylene polymer or polypropylene copolymer. In some embodiments, the first polymer is at least one of a polypropylene polymer or polypropylene-polyethylene copolymer. In some embodiments, the first polymer is a polypropylene polymer and a polypropylene-polyethylene copolymer. In certain embodiments, the first polymer is a polypropylene-polyethylene copolymer where the polyethylene is present in a minor amount, such as less than 35% by weight, based on the total weight of the first polymer. In certain embodiments, the first polymer is a polypropylene-polyethylene copolymer where the polyethylene is present in an amount, of less than 25% by weight, less than 20% by weight, less than 15% by weight, or less than 10% by weight, based on the total weight of the first polymer. The first polymer has any suitable melting point.

As noted hereinabove, the facestock film layer includes at least one of an opacifying agent or a clarifying agent. A variety of techniques are known to modify a polymer film and render it opaque. For example, an opaque polymer film can be produced by adding opacifying agents. The opacifying agent may be any suitable opacifying agent, such as for example, fillers and pigments, such as for example, titanium dioxide, calcium carbonate, talc, and the like. For oriented films, opacity can also be achieved by voiding or cavitation, for example by including at least one of organic or inorganic cavitating agents in one or more layers of the polymer film. In some embodiments, the film layer includes at least one cavitating agent. By "cavitating agent" is meant herein at least one particle that induces micro-voids in a material, thus rendering the material opaque. The presence of the cavitating agent in a layer of the film during the orientation of the film induces micro-voids. The voids scatter light, thereby causing the film to be opaque. With a high degree of voiding, the film density can be reduced accordingly. Any suitable cavitating agent can be used. In some embodiments, the cavitating agent is a void-initiating particle including at least one of an organic polymer or an inorganic material. In some embodiments, the cavitating agent is a void-initiating particle including an organic polymer, such as for example, a polyamide, (such as for example, nylon-6), a polyester (such as for example polybutylene terephthalate (PBT)), an acrylic resin, or combinations thereof. In some embodiments, the cavitating agent is a void-initiating particle including an organic polymer, such as for example cyclic olefin polymers, cyclic olefin copolymers, ethylene norbornene copolymers, or combinations thereof. In some embodiments, the cavitating agent is a void-initiating particle including an inorganic polymer, such as for example, a glass, metal, ceramic, silica, calcium carbonate (CaCO₃), clay, talc, or combinations thereof. In some embodiments, at least a portion of the film layer is an oriented polypropylene (PP) film, and the cavitating agent is a beta-nucleating PP. In some embodiments, at least a portion of the film layer is a beta-crystalline form of polypropylene. In some embodiments, the conformable label constructions have an opacity of at least 95% as determined by Technical Association of the Pulp and Paper Industry (TAPPI) standard T-425. In some embodiments, the conformable label constructions have an opacity of at least 80%, at least 84%, at least 90%, at least 95%, or at least 98%, as determined by TAPPI standard T-425.

The film layer may be a single or mono-layer film, or a multi-layer film. In some embodiments, the film layer is a single or mono-layer film layer. In some embodiments, the film layer is a multi-layer film layer, including at least two layers. In some embodiments, each layer of the multi-layer film is the same. In some embodiments, at least two of the layers of the multi-layer film are different. In some embodiments, each layer of the multi-layer film is different.

The formation of films is well known to those of ordinary skill in the film forming art, and need not be discussed herein in detail. There are a large number of vendors who can manufacture such films to exacting specifications. Plastic films can be produced using either the blown film or cast film processes. Blown films, also commonly known as tubular films, are created by extruding plastic through a tubular-shaped die and then stretched and blown with air to create a very thin-walled film. In some embodiments, the film layer is formed using a coextrusion process. Coextrusion is used to produce films containing more than one plastic layer. In this method, two or more different plastic granules are heated and melted separately. The melts are taken together either before or at the die lips, so that the mixed plastics are extruded as a single product, namely a multilayer web of plastic film or sheet. The film layer may have any suitable thickness. In some embodiments, the film layer has a thickness of from 55 µm to 135 µm, from 60 µm to 130 µm, from 65 µm to 130 µm, from 75 µm to 125 µm, or from 80 µm to 120 µm.

Polymer films can be stretched or oriented to improve properties such as mechanical strength, dimensional stability, chemical resistance, and optical appearance. In some embodiments the film layer is oriented in one direction. Such mono-axially oriented films are typically oriented in the machine direction (MD). In some embodiments, at least one film layer is oriented in the machine direction. In some embodiments, the film layer is oriented in the machine direction. In some embodiments, the laminate is oriented in the machine direction. Mono-axially oriented films can be stretched in an apparatus like a machine direction orienter (MDO) unit, such as is commercially available from the Marshall and Williams Company of Rhode Island, USA. A MDO unit has a plurality of stretching rollers that progressively stretch and thin the film in the machine direction, which is the direction of travel of the film through the apparatus. In some embodiments, at least one film layer is biaxially oriented. In some embodiments, the film layer is biaxially oriented. In some embodiments, the laminate is biaxially oriented. Biaxially oriented films, such as BOPP, can be produced for example, by a tubular (blown) process, or a tenter frame process, which are well known in the art. In some embodiments, at least one film layer is a blown film that is additionally oriented in the machine direction. In some embodiments, the film layer is a blown film that is additionally oriented in the machine direction.

In certain embodiments of the label construction, the film layer is microporous. In some embodiments, the laminate is microporous. By "microporous" is meant herein having a higher degree of permeability than a solid film. In some embodiments, the micropores in the microporous film or laminate, or both, are induced by cavitation of the film layer by stretching. Suitable microporous films are commercially available, such as for example Aptra^{®} films from RKW SE (located in Mannheim, Germany). In some embodiments, the microporous film or laminate, or both, is stretched or oriented to make the material more bendable.

As noted hereinabove, in addition to the film layer, the facestock laminate also includes at least one nonwoven layer. The presence of the nonwoven layer increases the flexibility of the label construction. In some embodiments, the non-woven layer has a thickness of from 8 µm to 16 µm. The non-woven layer includes a second polymer. Any suitable polymer may be used for the second polymer. In certain embodiments, the second polymer is a polypropylene homopolymer, a polypropylene copolymer, or both. In other words, in certain embodiments, the second polymer is at least one of a polypropylene homopolymer or a polypropylene copolymer. In certain embodiments, the second polymer is a polypropylene homopolymer, or a blend of a polypropylene (co)polymer and a polyethylene (co)polymer, or both. In other words, in certain embodiments, the second polymer is at least one of a polypropylene homopolymer, or a blend of a polypropylene (co)polymer and a polyethylene (co)polymer. As used herein, "(co)polymer" refers to both polymer and copolymer. The second polymer has a melting point that is at least 5°C greater than the melting point of the first polymer. In some embodiments, the second polymer has a melting point at least 10°C greater than the melting point of the first polymer. In some embodiments, the second polymer has a melting point at least 15°C, or at least 20°C, greater than the melting point of the first polymer.

The nonwoven layer may be formed by conventional methods. Suitable fibrous nonwoven web forming processes include, for example, spunbonding and meltblowing processes. In some embodiments, the non-woven material in the non-woven layer is made by a spunbonding or meltblowing process. Meltblown fibers are formed by extruding molten thermoplastic material through a plurality of fine usually circular die capillaries, as molten threads or filaments, into a high velocity, usually heated, gas stream, such as air, which attenuates the filaments of molten thermoplastic material to reduce their diameters. Thereafter, the meltblown fibers are carried by the high velocity, usually heated, gas stream, and are deposited on a collecting surface to form a web of randomly dispersed meltblown fibers. The meltblown process is well-known and is described in patents such as US-A-3,676,242 and US-A-3,849,241. Spunbond fibers are formed by extruding a molten thermoplastic material as filaments from a plurality of fine, usually circular, capillaries in a spinneret, with the diameter of the extruded filaments then being rapidly reduced, for example, by non-eductive or eductive fluid-drawing, or other well-known spunbonding mechanisms. The production of spunbond nonwoven webs is illustrated in patents such as US-A-4,340,563, US-A-3,802,817, US-A-3,692,618, US-A-3,338,992, US-A-3,341,394, US-A-3,276,944, US- A-3,502,538, US-A-3,502,763, and US-A-3,542,615.

Fibrous nonwoven webs made from multiconstituent and multicomponent fibers such as, for example, bicomponent fibers, can also be used to form the nonwoven layer. See, for example, US-A-5,336,552, which describes how to make bicomponent spunbond nonwoven webs. In some embodiments, the nonwoven layer is a non-woven web. It is also possible to form laminates for use as the nonwoven layer such as spunbond/meltblown laminates and spunbond/meltblown/spunbond laminates, as are taught, for example, in US-A-4,041,203. In some embodiments, the nonwoven layer is a non-woven laminate. In some embodiments, the nonwoven layer is a non-woven laminate including at least one of a spunbond non-woven or a meltdown nonwoven. In some embodiments, the nonwoven layer includes at least one of a spunbond/meltblown laminate or a spunbond/meltblown/spunbond laminate.

Once the film layer has been formed, and optionally stretched or oriented, as described hereinabove, it is laminated to the nonwoven layer. The lamination may be performed by any suitable means, such as for example, by adhesives, ultrasonic bonding, thermal lamination, and thermomechanical bonding such as through the use of heated calendering rolls. Such calendering rolls may include a patterned roll and a smooth anvil roll, though both rolls may be patterned or smooth. One, both or none of the rolls may be heated. In some embodiments, the lamination is performed by a thermal lamination method, where a film layer is produced by heating the film up to the molten state and combining the film with the nonwoven (which has a melting point sufficiently above the crystallite melting point of the film) and by then guiding the composite through a cooled nip, such as described in US-B2-7,947,147 and US-B2-10,221,166. In preferred embodiments, the starting film web may be stretched prior to lamination with the starting nonwoven web or composite containing the film, and the nonwoven may be stretched, such as described in US-B2-7,947,147 and US-B2-10,221,166.

In certain embodiments of the label construction, the film layer is oriented in both the MD and CD directions after the film is cast or blown. In certain embodiments of the label construction, the laminate is oriented in both the MD and CD directions. In certain embodiments of the label construction, after the film layer(s) and nonwoven layer(s) are laminated together, the laminate is oriented in a biaxial direction.

In some embodiments, the laminate includes two non-woven layers, with one film layer located between the two non-woven layers.

In certain embodiments, the facestock is corona treated on one or both sides. The corona treatment improves anchorage of at least one of the ink, topcoat, and/or adhesive as the case may be. By "anchorage" is meant herein the bonding strength between the facestock, or the film layer of the facetock, and the ink, topcoat, and/or adhesive.

As noted hereinabove, in addition to the facestock, the label construction also includes a topcoat and an adhesive layer. The topcoat is applied to at least a portion of the first surface of the facestock. In some embodiments, the topcoat is applied to the entire first surface of the facestock. In some embodiments, the topcoat is applied to substantially the entire first surface of the facestock. The topcoat may be applied to the facestock by any suitable means, such as for example, gravure coating. The topcoat may be applied to the facestock in any suitable amount. Conventional polyolefin labels typically need a high topcoat coat weight, such as 15 gsm. Meanwhile conventional PET films can be used with low topcoat coatweights, due to their higher heat resistance, however such films are not as flexible. The present label construction is flexible, and also enables the use of a lower coat weight than is typically found in conventional polyolefin labels for laser printing. In certain embodiments, the topcoat coat weight is lower than the coat weight needed for conventional labels to withstand laser printing, without experiencing curl or jam caused by film shrinkage or deformation due to the heat. In certain embodiments, the topcoat coat weight is lower than the coat weight needed for conventional labels to pass British Standard BS5609. In certain embodiments, the coatweight level of the topcoat is less than 10 gsm. In some embodiments, the coating level of the topcoat is less than 8 gsm, less than 7 gsm, less than 6 gsm, or less than 5 gsm. The topcoat can be made of any suitable material, such as for example, an acrylic polymer, a urethane acrylic polymer, or combinations thereof. In certain embodiments, the topcoat includes an acrylic polymer.

The adhesive layer has a first surface and a second surface. The first surface of the adhesive layer is applied to at least a portion of the second surface of the facestock. In some embodiments, the adhesive layer is applied to the entire second surface of the facestock. In some embodiments, the adhesive layer is applied to substantially the entire second surface of the facestock. The adhesive may be applied to the facestock in any suitable amount. In certain embodiments, the label constructions include an adhesive layer that is present at a coatweight level of from 15 gsm to 27 gsm. In some embodiments, the adhesive layer that is present at a level of from 18 gsm to 26 gsm, or from 20 gsm to 25 gsm. The adhesive can be made of any suitable material, such as for example, an acrylic polymer. In some embodiments, the adhesive includes a tackifier. In certain embodiments, the acrylic polymer is produced by emulsion polymerization, solvent polymerization, or polymerization by UV exposure. Examples of suitable acrylic emulsion polymers include those having a good performance on low surface energy substrates, showing excellent UV weathering and salt water exposure performance, and having good low temperature adhesive properties, such as for example acrylic emulsion polymers commercially available from Avery Dennison Corporation (located in Ohio, USA). In certain embodiments, the acrylic polymer is produced by solvent polymerization or 100% solids polymerization. In some embodiments, the acrylic polymer has a high tack to low surface energy substrates. In certain embodiments, the adhesive is a hot melt adhesive.

In certain embodiments, the label constructions further include a release liner layer applied to at least a portion of the second surface of the adhesive layer. In some embodiments, the release liner layer is applied to the entire second surface of the adhesive layer. In some embodiments, the release liner layer is applied to substantially the entire second surface of the adhesive layer. In certain embodiments, the release liner layer includes a polycoated kraft paper (PCK), or PET film liner. In certain embodiments, the release liner layer includes a clay-coated kraft paper (CCK).

As previously noted, no conventional labels seem to address the need for a label construction that has the conformability and print durability of PVC, without the inclusion of PVC for use as drum labels in harsh environments, such as marine environments. The present label constructions are flexible enough to be used as a replacement for PVC films, without the health, safety and sustainability issues associated with PVC films. The flexibility of the label constructions enable the label constructions to be applied on drums having a variety of different shapes and configurations. In some embodiments, the label constructions are 3-dimensional conformable films.

The conformability of a film can be measured in different ways, such as stress relaxation, load at hold, residual stress, or L&W (Lorentzen & Wettre) bending, as described in the examples hereinbelow. In some embodiments, the conformable label constructions exhibit a stress relaxation of at least 35% in both the MD and CD directions. In some embodiments, the conformable label constructions exhibit a stress relaxation of at least 40% in both MD and CD direction. In some embodiments, the conformable label constructions exhibit a load at hold of less than 10 lb/in (1750 N/m) in both MD/CD directions. In some embodiments, the conformable label constructions exhibit a load at hold of at least one of from 4 to 8 lb/in (700 to 1400 N/m) in the MD direction or less than 10 lb/in (1750 N/m) in the CD direction. In some embodiments, the conformable label constructions exhibit a load at hold of at least one of from 5 to 7 lb/in (880 to 1230 N/m) in the MD direction or less than 10 lb/in (1750 N/m) in the CD direction.

L&W (Lorentzen & Wettre) bending tests (also known as the Technical Association of the Pulp and Paper Industry (TAPPI) standard T-556) can be used to determine the bending resistance of a film, by measuring the force required to bend a specimen under controlled conditions. In some embodiments, the conformable label constructions exhibit a L&W bending of at least 14 mN in both the MD and CD directions, as determined by the following L&W bending test: cut samples measuring 50.8 mm x 38.1 mm are clamped by a 38 mm wide clamp in the specimen holder on a bending tester, such as for example an ABB L&W tester (commercially available from ABB Ltd., located in Zurich, Switzerland), and then passed mechanically by a load cell to determine the amount of force (measured in mN) necessary to bend a 5mm length of the sample at an angle of 15°. In some embodiments, the conformable label constructions exhibit an L&W bending of at least 14 mN, at least 25 mN, at least 40 mN, at least 50 mN in both the MD and CD directions, as determined by the above-specified L&W bending test. In some embodiments, the conformable label constructions exhibit an L&W bending in the MD of no more than 60 mN. In some embodiments, the conformable label constructions exhibit an L&W bending in the CD of no more than 90 mN.

Lower heat shrinkage of a film or construction advantageously reduces the curl of the film or construction, after laser printing. In some embodiments, the conformable label constructions exhibit a heat shrinkage, as measured by ASTM D1204 for 5 MIN at 130 °C, of from 1% to 6% in the MD direction and from 2% to 15% in the CD direction. In some embodiments, the conformable label constructions exhibit a heat shrinkage, as measured by ASTM D1204 for 5 MIN at 130 °C, of from 2% to 5% in the MD direction and from 3% to 10% in the CD direction.

In some embodiments, the conformable label constructions exhibit a layflat after laser printing of no more than 25.4 mm curl of each corner. In some embodiments, the conformable label constructions exhibit a layflat after laser printing by a British Standard BS5609 certified printer of no more than 25.4 mm curl of each corner. In some embodiments, the conformable label constructions exhibit a layflat at a relative humidity of 30% of no more than 25.4 mm curl of each corner. In some embodiments, the conformable label constructions exhibit a layflat at a relative humidity of 50% of no more than 25.4 mm curl of each corner. In some embodiments, the conformable label constructions exhibit a layflat at a relative humidity of 70% of no more than 25.4 mm curl of each corner. In some embodiments, the conformable label constructions exhibit a layflat of from 0" (0 mm) to 2" (50.8 mm). In some embodiments, the conformable label constructions exhibit a layflat of from 0" (0 mm) to 1.5" (38.1 mm). In some embodiments, the conformable label constructions exhibit a layflat of from 0" (0 mm) to 1" (25.4 mm).

Laser printing is an electrographic printing. A laser beam projects an image to be printed onto an electrically charged rotating drum coated with photoconductors. Photoconductivity allows charge to leak away from the areas exposed to light. Dry toner particles are then electrostatically picked up by the drum's charged areas, which have not been exposed to light. The drum then prints the image onto media by direct contact and heat, which fuses the ink to the media. The powder toner is composed of pigment particles and low melt polymer resins and can develop static-electrical charges easily. When printed labels exit a printer, they are typically charged. The static charge must dissipate quickly in order for the labels to be stacked neatly, and for the stack can be shuffled easily. High static charged labels can stick together. Static dissipation of the conformable label constructions enable continuous sheeting and printing. If the facestock surface resistance is too low, a good laser printing may not be achieved. Meanwhile, too high of a surface resistance may cause high static charge during sheeting, making it is not easy to stack the label constructions together. In some embodiments, the static dissipation of the constructions is achieved by a surface resistance of at least one of the facestock or the liner of from 1E8 to 1E13 ohm. In some embodiments, the static dissipation of the constructions is achieved by a surface resistance of at least one of the facestock or the liner of from 1E8 to 1E12, or from 1E9 to 1E10 ohm. In some embodiments, the static dissipation of the constructions is achieved by a surface resistance of both the facestock and the liner of from 1E8 to 1E13 ohm. In some embodiments, the static dissipation of the constructions is achieved by a surface resistance of both the facestock and the liner of from 1E8 to 1E12, or from 1E9 to 1E10 ohm.

In some embodiments, the conformable label constructions pass the printer jam test, whereby a sheet is fed into a laser printer and then the printer is manually stopped while the sheet is passing through the fuser roll; after a certain dwelling time (typically 20 s), the sheet is pulled out and inspected to determine whether it remains a continuous sheet with no stringing, when sheet was pulled out.

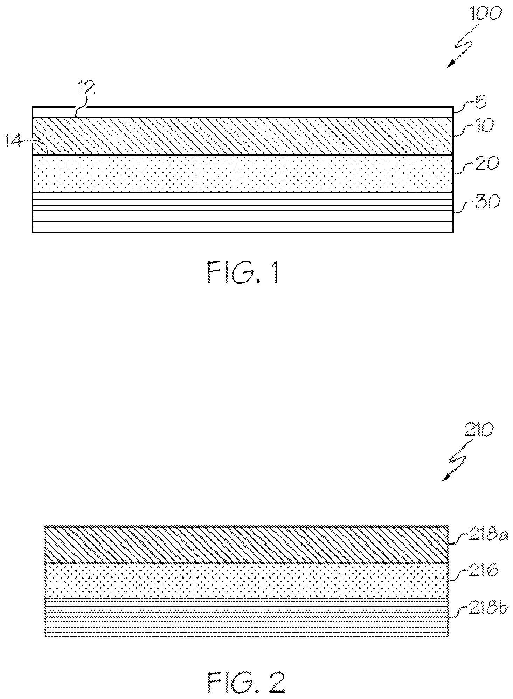

**FIG. 1** illustrates a label construction as described herein. The article **100** includes a topcoat **5,** a facestock layer **10,** pressure sensitive adhesive layer **20,** and optional release layer **30,** as described herein (and not shown to scale). The facestock layer **10** defines a first side **12** and an oppositely directed second side **14.** The facestock layer **10** is shown as a single layer, but may be multilayer. The pressure sensitive adhesive layer **20** is applied over at least a portion of the second side **14** of the facestock **10.** The pressure sensitive adhesive layer **20** is shown as a single layer, but may be multilayer. The topcoat **5** is applied over at least a portion of the first side 12 of the facestock **10.** Optional print indicia (not shown) may be applied to the topcoat layer **5** side of the label construction **100.**

Referring to **FIG. 2****,** the film/nonwoven laminate **210,** which serves as the facestock layer in the label construction according to the present invention, includes a film layer **216** and two nonwoven layers **218a, 218b,** wherein the film layer **216** is located between the two non-woven layers **218a, 218b.**

The present invention is also directed to storage drums on which are attached the label constructions as described hereinabove. The storage drums may be containers of any suitable type, such as for example, plastic (such as for example HDPE), metal (such as for example painted steel), cellulose fiber, and combinations thereof. In some embodiments, at least one indicia is applied to the label construction. In some embodiments, the at least one indicia is applied to the topcoat on the label construction facestock. In some embodiments, the at least one indicia is laser printed on the topcoat on the label construction facestock. Laser printing of the drum label requires special printing technology. Because it is difficult to pass the British Standard BS5609 test, there are only a few BS5609 certified printers available. A special combination of printer and toner are needed to pass BS5609, and suitable printers typically print at higher temperatures than normal office printers. Suitable commercial printers include, but are not limited to, printers sold under the brands of Lexmark C792e, Lexmark C6160 (commercially available from Lexmark International, Inc., located in Kentucky, USA); Primera CX1200 (commercially available from Primera Technology, Inc., located in Minneapolis, USA); NeuraLabel 500e, NeuraLabel 600e (commercially available from Neuralabel Printing Solutions, located in Texas, USA); Ricoh SP830, Ricoh 840 (commercially available from Ricoh Company, Ltd., located in Tokyo, Japan); Japan Electronics Ind. Inc JP 600-L, Japan Electronics Ind. Inc JP 621-LC (commercially available from Japan Electronics Ind. Inc, located in Japan).

The present invention is further described in the following Examples, in which all parts and percentages are by weight, unless otherwise stated. It should be understood that these examples, while indicating preferred embodiments of the present invention, are given by way of illustration only.

### EXAMPLES

The following test methods were used to evaluate exemplary embodiments and comparative materials, unless otherwise noted.

### Print durability testing:

Print durability is based on the Print Key /Anchorage Test, Abrasion Resistance Test, and Color Fastness set forth in Section 3 of British Standard Test BS5609 (1986) for printed pressure-sensitive, adhesive-coated labels for marine use.

For the Print Key/Anchorage, the test was run with 1-inch (2.54 cm) wide tape with a 15-second dwell at a 90° peel. Samples were evaluated to determine if no more than 5% ink was removed and color change was no more than 3.

For the Abrasion Resistance, the test samples were immersed for 24 hours with the printed label applied to a stainless steel rod in saline solution, which were exposed to 500 revolutions in a rod abrader vessel containing the water/sand mixture. The samples were evaluated to determine the legibility and identifiability of the text and symbols.

For the Color Fastness, test samples were exposed to five cycles of 17 hours UV light and 6 hours salt spray. The samples were evaluated to determine if the color fastness rating was greater than or equal to 2 (pass).

### Curl (Layflat) Testing:

**Layflat Standard Testing:** This test was used to measure the amount of curl on a laminate sample.

**Layflat at Different Humidities Testing:** A test sample is a 8.5" x 11" (21.6 x 27.9 cm) sheet, with the long edge (11"; 27.9 cm) in the biaxial direction. Samples were subjected to three different humidity environments (30%, 50%, 70%). The distance the corners lifted from the rack was measured and recorded in inches. A set of samples was placed with one sheet face up and one sheet face down into a 30% relative humidity (RH) chamber and L-shaped measuring rulers on each corner. Another set of samples was placed with one sheet face up and one sheet face down into a 70% RH chamber and L-shaped measuring rulers on each corner. A third set of samples was placed with one sheet face up and one sheet face down onto a rack in the TAPPI Lab (at 50% RH). Results were recorded after a 1-hour dwell and/or other time periods (such as 15 minutes and curl of each corner less than 25.4 mm, 38.1 mm and 50.8 mm).

**Layflat after laser printing:** The Layflat Standard Test (described above) was carried out 15 minutes after printing. The curl after laser printing may be caused by the distortion (film shrinkage) of the facestock in combination of the moisture evaporation, which may cause the liner to shrink and the laminate to curl. The curling makes continuous sheet printing difficult, if not impossible.

**Printer jam test:** This test observes if, when the printer is jammed with a label, the label sticks to the fuser roll and damages the printer. Once jammed in the printer, the facestock may locally melt and the adhesive layer may ooze and stick to drum, causing web breaks.

An old laser printer was used to perform the jam test. The sample sheet was fed in the printer and then the printer was manually stopped while the sample sheet was passing through the fuser roll. After certain dwelling time (typically 20 s), the sheet was pulled out and inspected. The function of the fuser roll is to melt the solid toner particles into the film surface and its temperature can reach 180°C. The label was examined to determine that it was still a continuous sheet with no stringing when sheet was pulled out.

Labels with polyolefin (PP/PE) tend to distort during laser printing due to their low melting temperature. If the label is jammed in the printer and stays in contact with fuser roll for extended period of time, it can melt and stick to the fuser roll and damage to the printer. This is especially problematic with BS5609-certified printers that typically run at higher temperatures.

### Antistatic testing:

Samples in the form of sheets (8.5" x 11"; 21.6 x 27.9 cm) were evaluated to determine if any had static prior to printing. A LEXMARK C792e color printer (commercially available from Lexmark International Inc., located in Kentucky, USA) was used for testing. Sample sheets were evaluated for jamming at the fuser area. Sample sheets were left in the fuser for two minutes after jam occurred (if any) to evaluate product melting.

In order to dissipate the static charge of the sample sheets, it is necessary to increase the conductivity or reduce the resistivity of the label. The surface resistance of both the facestock and liner were measured using a Trek 152-1 Resistance Meter (commercially available from Trek, Inc., located in New York, USA). It was desirable to have both face and liner resistance from 1E8 to 1E13 ohms, preferably, 1E8 to 1E12 ohms, more preferably from 1E9 to 1E10 ohms. It should be noted that if the facestock resistance is too low, a good laser printing may not be achieved. Also, high resistance may cause high static charge during sheeting, making it not easy to stack together.

**Opacity:** The testing was completed in accordance with TAPPI standard T-425 (2016).

### Stress Relaxation Testing:

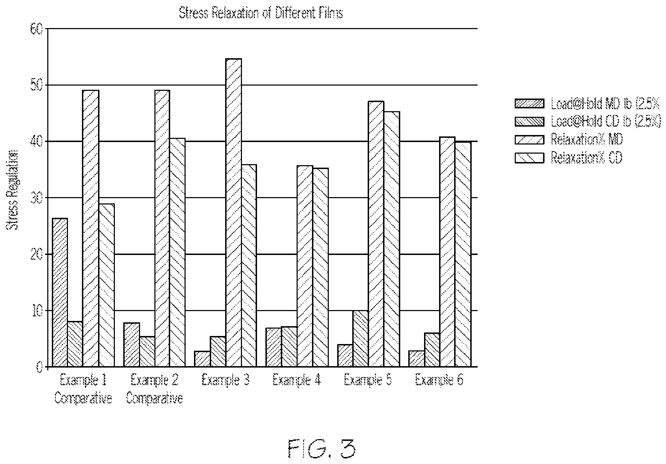

This test determined how much percentage the film stress relaxes after stretching and hold, where the higher the percentage of stress relaxation, the more flexible the film is. A pass was a stress relaxation of at least 35% in both MD and CD direction. Test results are shown in **FIG. 3****.** Also measured was the load (lb/in) (N/m) at hold, where the lower the load at hold, the easier it was to stretch the film. A pass was a load at hold of less than 10 lb/in (1750 N/m) in both MD/CD directions. Accordingly, the test measured the flexibility or conformability of the film.

**Stress Relaxation Test method:** An Instron Tensile Tester (commercially available from Instron Corporation, located in Massachusetts, USA) was used to measure a sample 10" gap 1" wide (25.4 x 2.54 cm). The samples were stretched at 4 inch (10.2 cm) per minute crosshead speed for 1/4" (0.635 cm) or 2.5%. The initial load (lb/in; N/m) was measured. The samples were held for 12 minutes and then the load was measured again (residual stress lb/in; N/m) at the same strain. The stress relaxation was calculated as the percentage load loss after 12 minutes.

Abbreviations used herein:
- PP: polypropylene
- PE: polyethylene
- MD: machine direction
- CD: cross direction
- gsm: grams/square meter
- RH: relative humidity
- C1S: coated on one side

The results are shown in the following table:

| | **Example 1 Comparative** | **Example 2 Comparative** | **Example 3** | **Example 4** | **Example 5** | **Example 6** |
|---|---|---|---|---|---|---|
| **Topcoat** | Acrylic | Acrylic | Acrylic | Acrylic | Acrylic | Acrylic |
| **Facestock Layer** | 100 µm MDO PP/PE film Transcode Drumlabel | 80 µm blown PP | 80 µm blown and MD oriented PP (with minor PE) film with two non-woven layers | 100 µm blown and MD oriented PP (with minor PE) film with two non-woven layers | 100 µm biaxially oriented PP (with minor PE) film with two non-woven layers | 100 µm biaxially oriented PP (with minor PE) film with two non-woven layers |
| **Adhesive Layer** | Acrylic emulsion 1 | Acrylic emulsion 1 | Acrylic emulsion 1 | Acrylic emulsion 1 | Acrylic emulsion 1 | Acrylic emulsion 2 |
| **Release Layer** | polycoated kraft paper (siliconized) | polycoated kraft paper (siliconized) | polycoated kraft paper (siliconized) | polycoated kraft paper (siliconized) | polycoated kraft paper (siliconized) | polycoated kraft paper (siliconized) |
| **Print Key/ Anchorage** | 2/fail (some red ink transfer) | 3/pass (some ink transfer) | 4/pass | 4/pass | 4/pass | not tested |
| **Abrasion Resistance** | 1/fail | 1/fail | 4/pass | 4/pass | 4/pass | - |
| **Color Fastness (after artificial accelerated weathering)** | 4/pass | -- | 4/pass | 4/pass | 4/pass | - |
| **Curl (22°C (72°F)/50% relative humidity)** | Flat | Flat | Flat | Flat | Flat | - |
| **Stress relaxation %** | MD: 49.2 | MD: 49.4 | MD: 54.8 | MD: 35.7 | MD: 47.1 | MD: 40.8 |
| | CD: 29.1 | CD: 40.8 | CD: 36.0 | CD: 35.6 | CD: 45.6 | CD: 40.1 |
| **Stress Load at hold lb/in (N/m)** | MD: 26.4 lb/in (4620 N/m) | MD: 7.8 lb/in (1370 N/m) | MD: 2.7 lb/in (470 N/m) | MD: 6.8 lb/in (1190 N/m) | MD: 3.2 lb/in (560 N/m) | MD: 2.8 lb/in (490 N/m) |
| | CD: 8.0 lb/in (1400 N/m) | CD: 5.5 lb/in (960 N/m) | CD: 5.4 lb/in (950 N/m) | CD: 7.1 lb/in (1240 N/m) | CD: 10.2 lb/in (1790 N/m) | CD: 5.9 lb/in (1030 N/m) |
| **Opacity** | 87% | 91% | >95% | >95% | >95% | >95% |
| **Laser Printing (Handling including static; layflat after laser printing and jamming)** | Fair handling; ok to fan; even stacking in output bin; did not pass layflat after laser printing; no jamming | Somewhat difficult handling; severe diagonal curl after printing; some jamming - some sheets folded back to exit area causing jams; static after printing | Fair/good handling after printing; good stacking in output binds; some static after printing; able to fan for double feed observation; passed layflat after laser printing; no jamming | Very good stacking and handling after printing; only slight static; able to fan for double feed observation; curled over time | Very good stacking and handling after printing; only slight static; there was no lift in the stack after 15 minutes | - |

## Claims

1. A label construction, comprising:
a facestock with a first surface and a second surface;
wherein the facestock comprises a laminate comprising:
at least one film layer comprising:
a first polymer having a melting point;
wherein the first polymer is selected from the group consisting of a polypropylene polymer, polypropylene copolymer, and a combination thereof; and
at least one of an opacifying agent and a cavitating agent; and
at least one non-woven layer comprising a second polymer;
wherein the second polymer has a melting point at least 5°C greater than the melting point of the first polymer;
a topcoat applied to at least a portion of the first surface of the facestock; and
an adhesive layer with a first surface and a second surface;
wherein the first surface of the adhesive layer is applied to at least a portion of the second surface of the facestock.

2. The label construction of claim 1, further comprising:
a release liner layer applied to at least a portion of the second surface of the adhesive layer, optionally
wherein the release liner layer comprises one of a polycoated kraft paper (PCK) or polyethylene terephthalate (PET) film.

3. The label construction of claim 1,
wherein the laminate comprises:
one film layer; and
two non-woven layers;
wherein the film layer is between the two non-woven layers.

4. The label construction of claim 1,
wherein the film layer is oriented in a machine direction, or
wherein the laminate is oriented in a machine direction.

5. The label construction of claim 1,
wherein the film layer is biaxially oriented, or
wherein the laminate is biaxially oriented.

6. The label construction of claim 1,
wherein the film layer is a blown film that is additionally stretched in the machine direction.

7. The label construction of claim 1,
wherein the facestock has a total thickness of from 50 µm to 150 µm, or
wherein the facestock has a total thickness of from 85 µm to 135 µm.

8. The label construction of claim 1,
wherein the first polymer is a polymer selected from the group consisting of a polypropylene homopolymer, a polypropylene-polyethylene copolymer, and combinations thereof.

9. The label construction of claim 1,
wherein the second polymer is a polymer selected from the group consisting of a polypropylene homopolymer, a polypropylene copolymer, and combinations thereof, or
wherein the second polymer is a polymer selected from the group consisting of a polypropylene homopolymer, and a blend of a polypropylene (co)polymer and a polyethylene (co)polymer, and combinations thereof.

10. The label construction of claim 1,
wherein the facestock is corona treated.

11. The label construction of claim 1,
wherein the opacifying agent is selected from the group consisting of titanium dioxide, calcium carbonate, talc, and combinations thereof.

12. The label construction of claim 1,
wherein the cavitating agent is at least one of an organic polymer and an inorganic material, optionally
wherein the organic polymer is selected from the group consisting of a polyamide, polyester, acrylic resin, and combinations thereof, or
wherein the organic polymer is selected from the group consisting of a cyclic olefin polymer, cyclic olefin copolymer, ethylene norbornene copolymer, and combinations thereof, or
wherein the inorganic material is selected from the group consisting of a glass, metal, ceramic, silica, calcium carbonate (CaCO₃), clay, talc and combinations thereof.

13. The label construction of claim 1,
wherein the coatweight level of the topcoat is less than 10 gsm, or
wherein the topcoat comprises at least one of an acrylic polymer and a urethane acrylic polymer.

14. The label construction of claim 1,
wherein the adhesive layer has a coatweight level of from 15 gsm to 27 gsm, or
wherein the adhesive layer comprises an acrylic polymer.

15. A storage drum, comprising:
a container;
wherein the container is formed from a material selected from the group consisting of plastic, metal, cellulose fiber, and combinations thereof; and
a label comprising:
the label construction of any one of claims 1-14; and
a laser-printed indicia applied to the topcoat.

## Patentansprüche

1. Etikettenaufbau, aufweisend:
ein Frontmaterial mit einer ersten Oberfläche und einer zweiten Oberfläche;
wobei das Frontmaterial einen Schichtstoff aufweist, der Folgendes umfasst:
mindestens eine Folienschicht, die Folgendes umfasst:
ein erstes Polymer mit einem Schmelzpunkt;
wobei das erste Polymer aus der Gruppe ausgewählt ist, die aus einem Polypropylen-Polymer, einem Polypropylen-Copolymer und einer Kombination hiervon besteht; und
ein Trübungsmittel und/oder ein Hohlraumbildungsmittel; und
mindestens eine Vlieslage, die ein zweites Polymer umfasst;
wobei das zweite Polymer einen Schmelzpunkt hat, der um mindestens 5 °C größer ist als der Schmelzpunkt des ersten Polymers;
eine Decklage, die auf mindestens einen Teilbereich der ersten Oberfläche des Frontmaterials aufgebracht ist; und
eine Klebeschicht mit einer ersten Oberfläche und einer zweiten Oberfläche;
wobei die erste Oberfläche der Klebeschicht auf mindestens einen Teilbereich der zweiten Oberfläche des Frontmaterials aufgebracht ist.

2. Etikettenaufbau nach Anspruch 1, darüber hinaus aufweisend:
ein Trennlagenschicht, die auf mindestens einen Teilbereich der zweiten Oberfläche der Klebeschicht aufgebracht ist, optional
wobei die Trennlagenschicht ein polybeschichtetes Kraftpapier (PCK) oder eine Polyethylenterephthalat-(PET)-Folie aufweist.

3. Etikettenaufbau nach Anspruch 1,
wobei der Schichtstoff aufweist:
eine Folienschicht; und
zwei Vliesschichten;
wobei sich die Folienschicht zwischen den beiden Vliesschichten befindet.

4. Etikettenaufbau nach Anspruch 1,
wobei die Folienschicht in einer Maschinenrichtung orientiert ist, oder
wobei der Schichtstoff in einer Maschinenrichtung orientiert ist.

5. Etikettenaufbau nach Anspruch 1,
wobei die Folienschicht biaxial orientiert ist, oder
wobei der Schichtstoff biaxial orientiert ist.

6. Etikettenaufbau nach Anspruch 1,
wobei die Folienschicht eine Blasfolie ist, die zusätzlich in der Maschinenrichtung gestreckt ist.

7. Etikettenaufbau nach Anspruch 1,
wobei das Frontmaterial eine Gesamtdicke von 50 µm bis 150 µm hat, oder
wobei das Frontmaterial eine Gesamtdicke von 85 µm bis 135 µm hat.

8. Etikettenaufbau nach Anspruch 1,
wobei das erste Polymer ein Polymer ist, das aus der Gruppe ausgewählt ist, die aus einem Polypropylen-Homopolymer, einem Polypropylen-Polyethylen-Copolymer sowie Kombinationen hiervon besteht.

9. Etikettenaufbau nach Anspruch 1,
wobei das zweite Polymer ein Polymer ist, das aus der Gruppe ausgewählt ist, die aus einem Polypropylen-Homopolymer, einem Polypropylen-Copolymer sowie Kombinationen hiervon besteht, oder
wobei das zweite Polymer ein Polymer ist, das aus der Gruppe ausgewählt ist, die aus einem Polypropylen-Homopolymer und einem Gemisch aus einem Polypropylen-(Co)-Polymer und einem Polyethylen-(Co)-Polymer sowie Kombinationen hiervon besteht.

10. Etikettenaufbau nach Anspruch 1,
wobei das Frontmaterial coronabehandelt ist.

11. Etikettenaufbau nach Anspruch 1,
wobei das Trübungsmittel aus der Gruppe ausgewählt ist, die aus Titandioxid, Calciumcarbonat, Talkum sowie Kombinationen hiervon besteht.

12. Etikettenaufbau nach Anspruch 1,
wobei das Hohlraumbildungsmittel ein organisches Polymer und/oder ein anorganisches Material ist, optional
wobei das organische Polymer aus der Gruppe ausgewählt ist, die aus einem Polyamid, Polyester, Acrylharz sowie Kombinationen hiervon besteht, oder
wobei das organische Polymer aus der Gruppe ausgewählt ist, die aus einem zyklischen Olefin-Polymer, zyklischen Olefin-Copolymer, Ethylen-Norbornen-Copolymer sowie Kombinationen hiervon besteht, oder
wobei das anorganische Material aus der Gruppe ausgewählt ist, die aus Glas, Metall, Keramik, Siliziumdioxid, Calciumcarbonat (CaCO₃), Ton, Talkum sowie Kombinationen hiervon besteht.

13. Etikettenaufbau nach Anspruch 1,
wobei das Beschichtungsgewichtsniveau der Decklage unter 10 g/m² liegt, oder
wobei die Decklage ein Acrylpolymer und/oder ein Urethan-Acrylpolymer umfasst.

14. Etikettenaufbau nach Anspruch 1,
wobei die Klebeschicht ein Beschichtungsgewichtsniveau von 15 g/m² bis 27 g/m² hat, oder
wobei die Klebeschicht ein Acrylpolymer umfasst.

15. Speichertrommel, aufweisend:
einen Behälter;
wobei der Behälter aus einem Material gebildet ist, das aus der Gruppe ausgewählt ist, die aus Kunststoff, Metall, Zellulosefasern sowie Kombinationen hiervon besteht, und
ein Etikett, aufweisend:
den Etikettenaufbau nach einem der Ansprüche 1 bis 14; und
eine lasergedruckte Kennzeichnung, die auf die Decklage aufgebracht ist.

## Revendications

1. Structure d'étiquette, comprenant :
une matière frontale présentant une première surface et une deuxième surface ;
sachant que la matière frontale comprend un stratifié comprenant :
au moins une couche de film comprenant :
un premier polymère ayant un point de fusion ;
sachant que le premier polymère est sélectionné dans le groupe constitué par un polymère de polypropylène, un copolymère de polypropylène, et une combinaison de ceux-ci ; et
au moins l'un d'un agent opacifiant et d'un agent de cavitation ; et
au moins une couche non tissée comprenant un second polymère ;
sachant que le second polymère a un point de fusion d'au moins 5 °C supérieur au point de fusion du premier polymère ;
un revêtement supérieur appliqué à au moins une partie de la première surface de la matière frontale ; et
une couche adhésive présentant une première surface et une deuxième surface ;
sachant que la première surface de la couche adhésive est appliquée à au moins une partie de la deuxième surface de la matière frontale.

2. La structure d'étiquette de la revendication 1, comprenant en outre :
une couche de garniture de détachement appliquée à au moins une partie de la deuxième surface de la couche adhésive, facultativement
sachant que la couche de garniture de détachement comprend l'un d'un film en papier kraft polyrevêtu (PCK) ou en polyéthylène téréphtalate (PET).

3. La structure d'étiquette de la revendication 1,
sachant que le stratifié comprend :
une couche de film; et
deux couches non tissées ;
sachant que la couche de film est située entre les deux couches non tissées.

4. La structure d'étiquette de la revendication 1,
sachant que la couche de film est orientée dans une direction de machine, ou
sachant que le stratifié est orienté dans une direction de machine.

5. La structure d'étiquette de la revendication 1,
sachant que la couche de film est orientée biaxialement, ou
sachant que le stratifié est orienté biaxialement.

6. La structure d'étiquette de la revendication 1,
sachant que la couche de film est un film soufflé qui est en outre étiré dans la direction de machine.

7. La structure d'étiquette de la revendication 1,
sachant que la matière frontale a une épaisseur totale comprise entre 50 µm et 150 µm, ou
sachant que la matière frontale a une épaisseur totale comprise entre 85 µm et 135 µm.

8. La structure d'étiquette de la revendication 1,
sachant que le premier polymère est un polymère sélectionné dans le groupe constitué par un homopolymère de polypropylène, un copolymère de polypropylène-polyéthylène, et des combinaisons de ceux-ci.

9. La structure d'étiquette de la revendication 1,
sachant que le second polymère est un polymère sélectionné dans le groupe constitué par un homopolymère de polypropylène, un copolymère de polypropylène, et des combinaisons de ceux-ci, ou
sachant que le second polymère est un polymère sélectionné dans le groupe constitué par un homopolymère de polypropylène, et un mélange d'un (co)polymère de polypropylène et d'un (co)polymère de polyéthylène, et des combinaisons de ceux-ci.

10. La structure d'étiquette de la revendication 1,
sachant que la matière frontale est traitée par effet corona.

11. La structure d'étiquette de la revendication 1,
sachant que l'agent opacifiant est sélectionné dans le groupe constitué par un dioxyde de titane, un carbonate de calcium, du talc, et des combinaisons de ceux-ci.

12. La structure d'étiquette de la revendication 1,
sachant que l'agent de cavitation est au moins l'un d'un polymère organique et d'un matériau inorganique, facultativement
sachant que le polymère organique est sélectionné dans le groupe constitué par un polyamide, un polyester, une résine acrylique, et des combinaisons de ceux-ci, ou
sachant que le polymère organique est sélectionné dans le groupe constitué par un polymère d'oléfine cyclique, un copolymère d'oléfine cyclique, un copolymère d'éthylène norbornène, et des combinaisons de ceux-ci, ou
sachant que le matériau inorganique est sélectionné dans le groupe constitué par un verre, un métal, une céramique, une silice, du carbonate de calcium (CaCO₃), de l'argile, du talc et des combinaisons de ceux-ci.

13. La structure d'étiquette de la revendication 1,
sachant que le niveau de grammage de revêtement du revêtement supérieur est inférieur à 10 g/m², ou
sachant que le revêtement supérieur comprend au moins l'un d'un polymère acrylique et d'un polymère acrylique d'uréthane.

14. La structure d'étiquette de la revendication 1,
sachant que la couche adhésive a un niveau de grammage de revêtement compris entre 15 g/m² et 27 g/m², ou
sachant que la couche adhésive comprend un polymère acrylique.

15. Tambour de stockage, comprenant :
un contenant ;
sachant que le contenant est formé à partir d'un matériau sélectionné dans le groupe constitué par un plastique, un métal, une fibre de cellulose, et des combinaisons de ceux-ci ; et
une étiquette comprenant :
la structure d'étiquette de l'une quelconque des revendications 1 à 14 ; et
une mention imprimée au laser appliquée au revêtement supérieur.
